(19) **Europäisches Patentamt European Patent Office Office européen des brevets**

(11) **EP 2 252 667 B1**

(12) **EUROPEAN PATENT SPECIFICATION**

(45) Date of publication and mention
of the grant of the patent:
**16.09.2015 Bulletin 2015/38**

(21) Application number: **09711256.9**

(22) Date of filing: **13.02.2009**

(51) Int Cl.:
*C09J 7/02* (2006.01)    *C09J 9/00* (2006.01)
*C09J 11/08* (2006.01)    *B32B 7/00* (2006.01)
*A61L 24/00* (2006.01)

(86) International application number:
**PCT/US2009/034026**

(87) International publication number:
**WO 2009/102933 (20.08.2009 Gazette 2009/34)**

(54) **FLUID ABSORBENT ADHESIVE ARTICLES**

FLÜSSIGKEIT ABSORBIERENDE KLEBARTIKEL

ARTICLES ADHÉSIFS ABSORBANT DU FLUIDE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **14.02.2008 US 28556 P**

(43) Date of publication of application:
**24.11.2010 Bulletin 2010/47**

(73) Proprietor: **Avery Dennison Corporation
Pasadena, CA 91103 (US)**

(72) Inventors:
• **WIBAUX, Anne Marie, Paule
B-2018 Antwerpen (BE)**
• **DHAEZE, Kristine
B-2275 Glerle (BE)**
• **VON BAVEL, Davy
B-2360 Vosselaar (BE)**

(74) Representative: **Müller-Boré & Partner
Patentanwälte PartG mbB
Friedenheimer Brücke 21
80639 München (DE)**

(56) References cited:
**WO-A-01/30406          WO-A-2004/103432
WO-A-2007/016265**

**Description**

**Cross-Reference to Related Application**

The present application claims priority to U.S. Provisional Serial No. 61/028,556 filed February 14, 2008, which is incorporated herein by reference in its entirety.

**Background of the Invention**

The present invention relates to a fluid absorbing pressure sensitive adhesive composition and adhesive articles including the fluid absorbing adhesive that have particular utility in the medical field, and in particular, for use with wound dressings. The adhesive composition has superior fluid handling capacity, moisture vapor transmission and skin adhesion.

Hydrocolloid containing dressings and adhesive articles are widely used in the treatment of wounds. It is desirable that the hydrocolloid containing article be highly absorbent, have a high moisture vapor transmission rate (MVTR) and at the same time not be too thick, so that a high degree of flexibility and comfort is maintained for the patient.

**Summary of the Invention**

In one embodiment of the invention, there is provided an adhesive composite having superior skin adhesion, breathability and fluid handling capacity.

The fluid absorbing adhesive layer may be made up of a single adhesive film or multiple adhesive films laminated together. The multiple adhesive films may have the same composition or different compositions.

In embodiment of the invention, there is provided a multilayer adhesive composite that includes two absorbing layers, the composite having a higher fluid handling capacity than a single adhesive layer composite without significantly increasing the thickness of the composite. The multilayer composite comprises: (i) a polymeric backing layer having a first surface and a second surface; (ii) a first fluid absorbing adhesive layer having a first surface and a second surface comprising a solvent-based acrylic pressure sensitive adhesive comprising 20-80% by weight of at least one super-absorbent polymer or hydrocolloid having an average particle size of less than 150 $\mu$m, wherein the thickness of the adhesive layer is about 40 $\mu$m to about 300 $\mu$m and the first surface of the first adhesive layer is adhered to the second surface of the backing layer; and (iii) a second fluid absorbing adhesive layer having a first surface and a second skin-contacting surface comprising a rubber-based pressure sensitive adhesive, wherein the thickness of the adhesive layer is at least 300 $\mu$m and the first surface of the second adhesive layer is adhered to the second surface of the first adhesive layer, and wherein the overall adhesive composite has a fluid handling capacity of at least 4000 g/m$^2$/24 hours.

**Brief Description of the Drawings**

Figure 1 is a schematic cross-sectional view of an adhesive article .

Figure 2 is a schematic cross-sectional view of one embodiment of the adhesive article having two adjacent adhesive layers, each of the adhesive layers comprising a fluid absorbing solvent-based acrylic adhesive.

Figure 3 is a schematic cross-sectional view of one embodiment of the adhesive article having three adjacent adhesive layers.

Figures 4 and 5 are schematic cross-sectional views of embodiments of the adhesive article having two adhesive layers, wherein the adhesive layers have different surface areas.

Figure 6 is a schematic cross-sectional view of one embodiment of the adhesive article having two adhesive layers, one layer comprising a thin fluid absorbing solvent-based adhesive layer and the other comprising a thicker fluid absorbing rubber-based adhesive layer.

Figure 7 is a schematic cross-sectional view of an embodiment of the adhesive article having two adhesive layers, one layer comprising a thin fluid absorbing solvent-based adhesive layer and the other comprising a thicker fluid absorbing rubber-based adhesive layer, wherein the adhesive layers have different surface areas.

**Detailed Description of the Invention**

The present invention is directed to a fluid absorbing pressure sensitive adhesive comprising a solvent-based acrylic adhesive and at least one super-absorbent polymer having an average particle size of less than about 100 $\mu$m.

The fluid absorbing adhesive may be coated onto a breathable polymeric backing to provide an adhesive composite according to claim 1 and a moisture vapor transmission rate of at least 1100 g/m$^2$/24 hours. In one embodiment, the moisture vapor transmission rate is at least 1200 g/m$^2$/24 hours.

As used herein, the term "Fluid Handling Capacity" means the combined ability of the article to take up moisture and to evaporate it to the environment. The fluid handling capacity of the composite in one embodiment is at least about 2500 g/m$^2$/24 hours, or at least about 3500 g/m$^2$/24 hours at an adhesive layer thickness of about 80 $\mu$m to about 300 $\mu$m.

The static absorption of the composite, in one embodiment, is greater than 600 g/m$^2$/24 hours, or at least about 700 g/m$^2$/24 hours, or at least about 850 g/m$^2$/24 hours, or at least about 1000 g/m$^2$/24 hours.

**Acrylic Adhesive**

The solvent-based acrylic adhesive may be any pressure sensitive adhesive that is capable of adhering to mammalian skin and that is free of ingredients known to cause undue irritation or toxicity to mammals.

Useful acrylate copolymers may or may not be self-crosslinking and are formed from at least two monomers chosen from: (1) hydroxyalkyl esters of acrylic or methacrylic acid in which the alkyl group comprises 2 to 4 carbon atoms, such as 2-hydroxyethyl acrylate, 2-hydroxyethyl methacrylate, 2-hydroxypropyl acrylate and 2-hydroxypropyl methacrylate; (2) alkyl esters of acrylic or methacrylic acid in which the alkyl group of the ester comprises 4 to 18 carbon atoms, such as n-butyl acrylate or methacrylate, isopropyl acrylate or methacrylate, n-hexyl methacrylate and 2-ethylhexyl acrylate; (3) $\alpha,\beta$-unsaturated monocarboxylic or dicarboxylic acids, their anhydrides and their alkyl or alkenyl esters in which the alkyl group contains from 1 to 3 carbon atoms and the alkenyl group contains from 2 to 5 carbon atoms, such as acrylic acid, itaconic acid, maleic acid, maleic anhydride, alkyl methacrylate and the diethyl esters of fumaric or maleic acid; (4) vinyl monomers, such as vinyl acetate, acrylonitrile, vinyl propionate, vinylpyrrolidone and styrene; (5) monomers containing a functional group selected from amido, amino and epoxy groups, for example, acrylamide, N-butylacrylamide, alkylaminoalkyl and aminoalkyl derivatives of acrylic or methacrylic acid, such as amino-ethyl acrylate, aminoethyl methacrylate and 2-(dimethylamino) ethyl methacrylate, glycidyl methacrylate and glycidyl acrylate; (6) alkoxyalkyl esters of acrylic or methacrylic acid, for example methoxyethyl acrylates or methacrylates, butoxyethyl acrylates or methacrylates, methoxypropylene glycol acrylates or methacrylates and methoxypolyethylene glycol acrylates or methacrylates; and (7) hexamethylene glycol dimethacrylate.

As these copolymers can be self-crosslinking, they may also contain a crosslinking agent selected from those generally used by those skilled in the art, for example, organic peroxides, polyisocyanates, chelates or metals such as titanium or aluminum, or metal acetylacetonates, such as those of zinc, magnesium and aluminum.

These adhesive acrylate copolymers may take the form of solutions in a solvent system consisting of a single organic solvent or a mixture of several solvents, which contain about 25% to about 55% by weight copolymers. Examples of suitable solvents include aromatic solvents such as toluene, xylene, etc. Suitable aliphatic solvents include esters such as ethyl acetate, propyl acetate, isopropyl acetate, butyl acetate, etc.; ketones such as methyl ethyl ketone, acetone, etc.; aliphatic hydrocarbons such as heptanes, hexane, pentane, etc.

There can be included in the adhesive composition additive materials that do not affect the basic properties of the adhesive. Fillers, tackifiers, antioxidants, stabilizers, and the like may be added to the formulate adhesive. Further, pharmaceutically active components, such as for example, antimicrobials, anti-inflammatory agents, analgesic agents, anesthetics, or other pharmaceutically acceptable compounds, which do not affect the basic properties of the adhesive can be included in the adhesive layer in a pharmaceutically effective amount.

An example of a useful commercially available adhesive is DURO-TAK 380-2819 from National Starch, which is a self-crosslinking solution acrylic pressure sensitive adhesive containing 40% by weight solids in a solvent blend of ethyl acetate/isopropanol/heptanes/toluene/pentanedione.

**Super Absorbent Polymer**

The super absorbent polymer (SAP) useful in the adhesive composition comprises a water-swellable, hydrogel-forming absorbent polymer capable of absorbing large quantities of liquids such as water, body fluids (e.g., urine, blood), and the like. Additionally, the SAP is capable of retaining such absorbed fluids under moderate pressures. Typically the SAP absorbs many times its own weight in water, preferably at least 50 times, more preferably at least 100 times, most preferably at least 150 times its weight in water. Additionally, the SAP exhibits good saline fluid absorption under load and high saline fluid absorption capacity. Typically the SAP absorbs at least 10 times, preferably at least 30 times, more preferably at least 50 times its weight in saline fluid. Even though the SAP is capable of absorbing many times its own weight in water and/or saline, it does not dissolve in these fluids.

The ability of the SAP to absorb water and/or saline fluid is related to the degree of crosslinking present in the SAP. Increasing the degree of crosslinking increases the SAP's total fluid holding capacity under load. The degree of crosslinking is preferably optimized to obtain a composition in which the rate and amount of absorbency are optimized. Preferred SAPs are at least 10 %, more preferably from about 10 % to about 50 %, most preferably from about 20 % to 40 % crosslinked. Examples of suitable SAPs include crosslinked and polymerized $\alpha,\beta$-beta ethylenically unsaturated mono- and dicarboxylic acids and acid anhydride monomers including, e.g., acrylic acid, methacrylic acid, crotonic acid, maleic acid/anhydride, itaconic acid, fumaric acid, and combinations thereof.

Superabsorbent polymers useful in the invention include, e.g., crosslinked acrylate polymers, crosslinked products of vinyl alcohol-acrylate copolymers, crosslinked products of polyvinyl alcohols grafted with maleic anhydride, crosslinked products of acrylate- methacrylate copolymers, crosslinked saponification products of methyl acrylate-vinyl acetate copolymers, crosslinked products of starch acrylate graft copolymers, crosslinked saponification products of starch acrylonitrile graft copolymers, crosslinked products of carboxymethyl cellulose polymers and crosslinked products of isobutylene-maleic anhydride copolymers, and combinations thereof.

The superabsorbent particles preferably are spherical and have an average particle size of from about 1 micrometer ($\mu$m) to about 400 ($\mu$m). Preferably the particles have an average particle size of from about 20 $\mu$m to about 200 $\mu$m, and more preferably from 20 $\mu$m to 150 $\mu$m. In one embodiment, the particle size of the particles is less than 150 $\mu$m, or less than 100 $\mu$m. Useful commercially available superabsorbent particles includes, e.g., sodium polyacrylate superabsorbent particles available under the AQUA KEEP series of trade designations including, e.g., particles having an average particle size of from about 20 $\mu$m to about 30 $\mu$m available under the trade designation AQUA KEEP 1 OSH-NF, particles having an average particles size of from 200 $\mu$m to 300 $\mu$m available under the trade designation AQUA KEEP 10SH-P. particles having an average particle size of from 320 $\mu$m to 370 $\mu$m available under the trade designation AQUA KEEP SA60S, particles having an average particle size of from 350 $\mu$m to 390 $\mu$m available under the trade designations AQUA KEEP SA60SX, SA55SX $\pi$ and SA 60SL II, and particles having an average particle size of from 250 $\mu$m to 350 $\mu$m available under the trade designation AQUA KEEP SA60N TYPE II from Sumitomo Seika Chemicals Col, Ltd. (Japan). Also available superabsorbent materials are Luquasorb 1010 and Luquasorb 1030 from BASF, Ludwigshafen, Germany.

In one embodiment, the adhesive contains about 20% by weight to about 80% by weight of a superabsorbing polymer. In another embodiment, the adhesive contains about 40 to about 60% by weight of a superabsorbing polymer.

Hydrocolloids:

The adhesive composition may include a hydrocolloid. The hydrocolloids enable the final composition to adhere to moist body surfaces. This phenomenon is termed "wet tack". One or more water swellable hydrocolloids may also be present. The hydrocolloid may be linear or crosslinked. Suitable hydrocolloids include synthetic hydrocolloids such as sodium carboxymethyl cellulose, and natural products such as gelatin, pectin, guar gum, locust bean gum, tragacanth gum, gum karaya, starches, gum arabic, alginic acid and its sodium and/or calcium salts. Other synthetic hydrocolloids such as polyvinyl alcohol, polyvinyl acetate, polyvinyl pyrollidone, polyacrylic acid, polyhydroxyalkyl acrylates, polyacrylamides, high molecular weight polyethylene glycols and polypropylene glycols are useful. Others hydrocolloids include crosslinked or crystalline sodium carboxymethyl cellulose, crosslinked dextran and starch-acrylonitrile graft copolymer.

The hydrocolloids particles preferably have an average particle size of from about 1 micrometer ($\mu$m) to about 400 ($\mu$m). Preferably the particles have an average particle size of from about 20 $\mu$m to about 200 $\mu$m, and more preferably from 20 $\mu$m to 150 $\mu$m. In one embodiment, the particle size of the particles is less than 150 $\mu$m, or less than 100 $\mu$m.

**Backing:**

The backing layer is made of a thin polymeric elastic or flexible film that is water vapor permeable. The film may be liquid and/or bacteria impermeable. The backing layer may comprise polyurethane, elastomeric polyester, blends of polyurethane and polyester, polyvinyl chloride, polyether-amide block copolymer and porous polyethylene. In one embodiment, the backing is a polyurethane film.

Suitable backing layers are thin and have good conformability. In one embodiment, the thickness of the backing is in the range of about 10 $\mu$m to about 75 $\mu$m, or about 15 $\mu$m to about 45 $\mu$m, or about 20 $\mu$m to about 30 $\mu$m. The moisture vapor transmission rate (MVTR) of the backing layer alone is within the range of about 1500 to about 14600 g/m$^2$/24 hours, or from about 2500 to about 3000 g/m$^2$/24 hours at 38°C.

**Release Liner:**

In one embodiment, the adhesive article includes a release-coated liner on the skin-contacting side, which is retained in place prior to use and is removed just prior to application to the user's skin. The release-coated liner may be any release-coated liner known in the art that is compatible with the pressure sensitive adhesive of the skin-contacting side of the adhesive article.

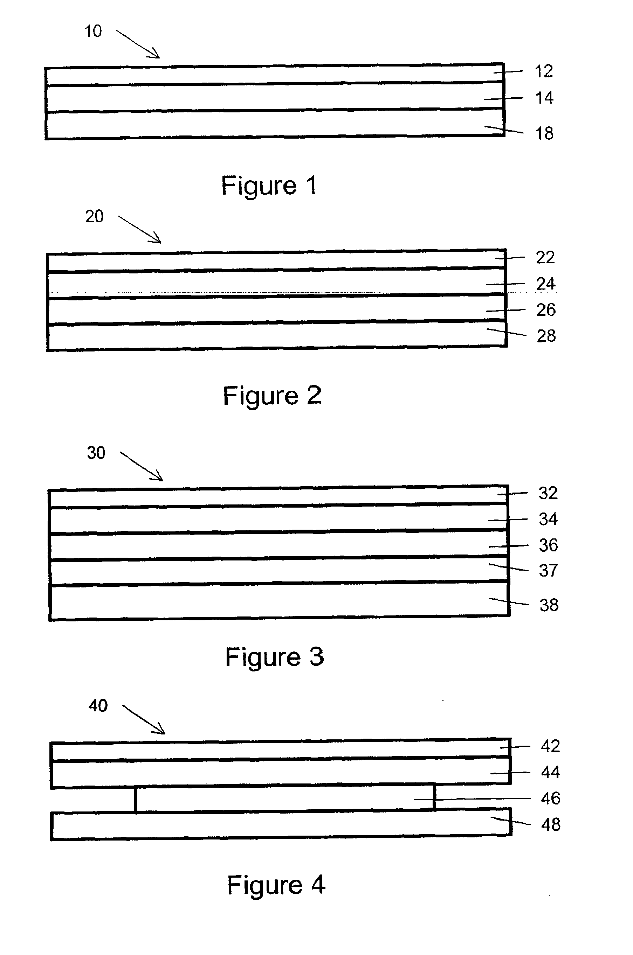

Figure 1 is a schematic cross-sectional view of a skin-contacting adhesive article 10. The adhesive article 10 includes a breathable backing layer 12, adhesive layer 14 adhered to the backing layer, and an optional release liner 18 removably adhered to the adhesive layer. Prior to use, the release liner 18, if present, is removed to allow adhesive layer 14 to be applied to the skin of the user. Adhesive layer 14 contains a solvent based acrylic adhesive having at least one super absorbing polymer dispersed therein. The thickness of adhesive layer 14 can be in the range of about 40 to about 200 $\mu$m. In one embodiment, the thickness of the adhesive layer less than about 200 $\mu$m, or within the range of about 60 to about 150 $\mu$m. With the solvent based adhesives, coat weights greater than about 200 $\mu$m may result in undesirably high levels of residual solvent after drying of the coated adhesive.

Figure 2 is a schematic cross-sectional view of a skin-contacting adhesive article 20 in accordance with another embodiment of the invention. The adhesive article 20 includes a breathable backing layer 22, a first adhesive layer 24 adhered to the backing layer, a second adhesive layer 26 adhered to the first adhesive layer and an optional release liner 28 removably adhered to the second adhesive layer 26. Prior to use, the release liner 28, if present, is removed to allow adhesive layer 26 to be applied to the skin of the user. Each of adhesive layers 24 and 26 contains a solvent based acrylic adhesive having at least one super absorbing polymer dispersed therein. The super absorbing polymer content of adhesive layer 24 may be in the range of about 20% to about 80% by weight and the super absorbing polymer content of adhesive layer 26 may be in the range of about 20% to about 60% by weight, based on the total weight of the adhesive layer. The thickness of each adhesive layer may be in the range of about 40 to about 200 $\mu$m, so that the overall thickness of the adhesive is within the range of about 80 to about 400 $\mu$m, or within the range of about 150 to about 300 $\mu$m.

Figure 3 is a schematic cross-sectional view of a skin-contacting adhesive article 30 in accordance with a further embodiment of the invention. The adhesive article 30 includes a breathable backing layer 32, a first adhesive layer 34 adhered to the backing layer, a second adhesive layer 36 adhered to the first adhesive layer and a third adhesive layer 37 adhered to the second adhesive layer. The adhesive article may include a release liner 38 removably adhered to the third adhesive layer. Each of adhesive layers 34, 36 and 37 contains a solvent based acrylic adhesive having at least one super absorbing polymer dispersed therein. The super absorbing polymer content of adhesive layers 34 and 36 may be in the range of about 20% to about 80% by weight and the super absorbing polymer content of adhesive layer 37 may be in the range of about 20% to about 60% by weight, based on the total weight of the adhesive layer. The thickness of each adhesive layer may be in the range of about 40 to about 200 $\mu$m. The multiple layers of adhesive provide higher performance with respect to fluid handling capacity, moisture vapor transmission and static absorption.

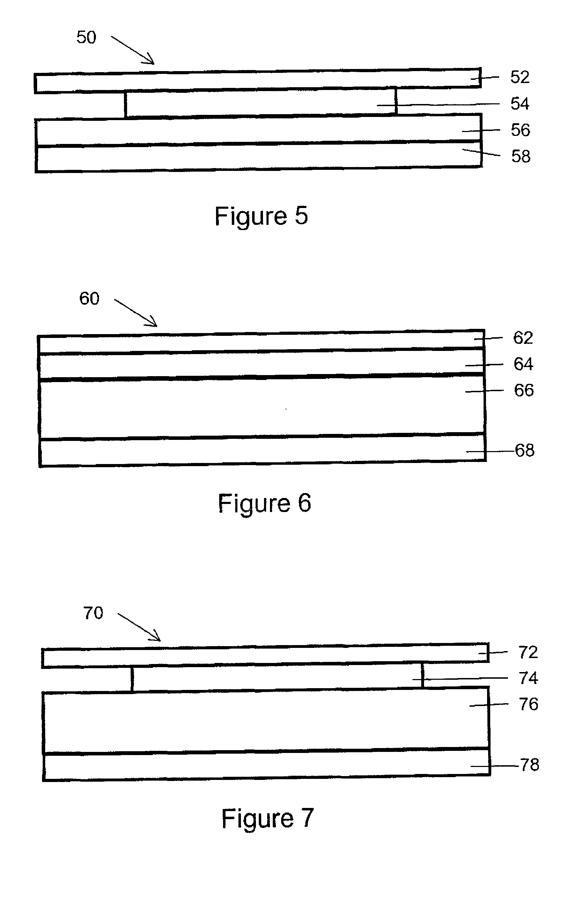

Figures 4 and 5 illustrate embodiments similar to that shown in Figure 2, with the exception that the surface area of the two adhesive layers may be different. Specifically, the adhesive article 40 of Figure 4 includes a breathable backing layer 42, a first adhesive layer 44 adhered to the backing layer, a second adhesive layer 46 adhered to the first adhesive layer and an optional release liner 48 removably adhered to the second adhesive layer 46. Each of adhesive layers 44 and 46 contains a solvent based acrylic adhesive having at least one super absorbing polymer dispersed therein. The surface area of adhesive layer 46 is less than the surface area of adhesive layer 44. In another embodiment shown in Figure 5, the adhesive article 50 includes a breathable backing layer 52, a first adhesive layer 54 adhered to the backing layer, a second adhesive layer 56 adhered to the first adhesive layer and an optional release liner 58 removably adhered to the second adhesive layer 56. The surface area of adhesive layer 54 is less than the surface area of adhesive layer 56.

The fluid absorbing solvent-based acrylic adhesive may be combined with another absorbing adhesive layer to form an adhesive article having improved absorbing properties without significantly increasing the overall thickness of the adhesive article. For example, a thin layer of the fluid absorbent solvent-based acrylic adhesive may be combined with a relatively thicker layer of another fluid absorbing adhesive layer, such as a rubber based, hydrocolloid containing adhesive layer to increase the fluid handling capacity of the rubber based adhesive.

Examples of rubber based adhesives may include those comprising solid rubbers such as linear or radial A-B-A block copolymers or mixtures of these A-B-A block copolymers with simple A-B block copolymers. However, the proportion of A-B block copolymers, relative to the A-B-A block copolymers, should not normally exceed 85% by weight of the (total) block copolymers. In one embodiment, the proportion is in the range from about 35 to about 85% by weight of the block copolymers, and in another embodiment, the proportion is from about 55 to about 75% by weight of the block copolymers. In one embodiment, lower amounts such as 10 to 35% by weight of the block copolymers are used. These block copolymers can be based on styrene-butadiene, styrene-isoprene, and hydrogenated styrene-diene copolymers such as styrene ethylene-butylene. Suitable styrene-diene copolymers are exemplified by a blend of linear styrene-isoprene-styrene triblock copolymer and linear styrene-isoprene diblock copolymer. Such a material is available from Kraton Polymers as KRATON® D-1161 K and has a bound styrene content of about 15% and a diblock content of 17%. A second example is a blend of linear styrene-isoprene-styrene triblock copolymer and linear styrene-isoprene diblock copolymer available from Shell Chemical as KRATON® D-1117 and which has a bound styrene content of about 17% and a diblock content of 33%.

An example of a suitable hydrogenated styrene-diene copolymer is a thermoplastic elastomer comprising a blend of clear linear triblock and diblock copolymer based on styrene and ethylene-butylene with a bound styrene of 14% mass. Such a material is commercially available from Shell Chemical Company as KRATON® G-1657. Another example is KRATON® G-1652 from Shell Chemical Company, which is a thermoplastic elastomer comprised of a clear linear triblock copolymer based on styrene and ethylene-butylene, S-E/B-S, with a bound styrene content of about 30% by weight. Also suitable are polymers in which there is a combination of chemically saturated blocks and chemically unsaturated blocks. For example, a branched copolymer consisting of two polyisoprene chains attached to the rubber midblock of a styrene/ethylene-butylene/styrene triblock copolymer. Such a material, for example, is available from Shell Chemical Company having a styrene content of 18%, and isoprene content of 36% and an ethylene-butylene content of 46% by weight. Also, a low styrene synthetic copolymer of butadiene and styrene, commonly called SBR rubber, can be used as a solid rubber.

In one embodiment, liquid rubbers may be added to the adhesive material to adjust or control the adhesive or other characteristics. Liquid rubbers useful in this embodiment of the invention include synthetic liquid isoprene rubber, depolymerized natural rubber, various functionally terminated synthetic liquid isoprene-styrene rubbers and liquid isoprene rubbers, liquid isoprene-styrene copolymer, liquid isoprene-butadiene copolymer, liquid butadiene-styrene copolymer and hydrogenated versions of these materials such as liquid ethylene-propylene-styrene. These liquid rubbers are generally compatible with the solid rubber. The liquid rubbers typically have a molecular weight of 25,000 to 50,000, a glass transition temperature of less than -50°C., and a viscosity at 38°C of 50 to 10,000 Pas. A block copolymer of styrene and isoprene having a styrene content of about 13% and an isoprene content of about 87%, a glass transition of about -60°C., a melt viscosity of about 240 Pas at 50°C and which is commercially available from Shell Chemical Company as LIR310, is particularly useful in the practice of the invention. Within the adhesive material, in one embodiment, the weight ratio of solid rubber to liquid rubber is in the range from about 100:1 to about 1:2, and is varied in order to obtain the desired degree of adhesiveness and tackiness. In one embodiment, the weight ratio of solid rubber to liquid rubber is in the range from about 50:1 to about 5:1, and in another embodiment, from about 20:1 to about 10:1.

Optionally, an elastomeric polymer such as butyl rubber or high molecular weight polyisobutylene may also be blended into the adhesive material. The optional butyl rubber may be used in the viscosity average molecular weight range of 200,000 to 600,000 and is exemplified by the grades Butyl 065 or Butyl 077, both available from Exxon Chemical. The optional high molecular weight polyisobutylene may be used in the viscosity average molecular weight range of 800,000 to 2,500,000 and is exemplified by the VISTANEX® MM series of products, available from Exxon Chemical, with the MM L-80 grade being a preferred grade for the optional high molecular weight polyisobutylene. The optional high molecular weight rubbers, blended as is indicated above, may be added in amounts suitable to modify various properties of the final formulation and may be from 0% to about 50% of the total weight of the adhesive material, and in one embodiment from about 0.5% to about 25% of the total weight of the adhesive material, and in one embodiment from about 5% to about 10% of the total weight of the adhesive material. The optional low molecular weight polybutenes and/or mineral oil may be added in amounts from 0% to about 20% of the weight of the adhesive material and in one embodiment from about 0.5% to about 10% of the total weight of the adhesive material, and in one embodiment from about 0.5% to about 5% of the total weight of the adhesive material.

Figure 6 is a schematic cross-sectional view of a skin-contacting adhesive article 60 having multiple layers of different adhesives in accordance with one embodiment of the invention. The adhesive article 60 includes a breathable backing layer 62, a first adhesive layer 64 adhered to the backing layer wherein the first adhesive layer 64 contains a solvent based acrylic adhesive having at least one super absorbing polymer dispersed therein. The super absorbing polymer content of adhesive layer 64 may be in the range of about 20% to about 80% by weight based on the total weight of the adhesive layer 64. The thickness of the first adhesive layer 64 may be in the range of about 60 to about 200 μm. A second adhesive layer 66 is adhered to the first adhesive layer 64. Adhesive layer 66 may be a thicker layer of another absorbing adhesive, for example, a 200 μm to 1000 μm layer of a rubber-based hydrocolloid adhesive. The adhesive article may contain an optional release liner 68 removably adhered to the second adhesive layer 66. Prior to use, the release liner 68, if present, is removed to allow adhesive layer 66 to be applied to the skin of the user.

Figure 7 illustrates an embodiment similar to that of Figure 6, with the exception that the surface area of the first adhesive is less than the surface area of the second adhesive. Specifically, the adhesive article 70 includes a breathable backing layer 72, a first adhesive layer 74 adhered to the backing layer wherein the first adhesive layer 74 contains a solvent based acrylic adhesive having at least one super absorbing polymer dispersed therein. A second adhesive layer 76 is adhered to the first adhesive layer 74. Adhesive layer 76 may be a thicker layer of another absorbing adhesive. Optional release liner 78 is removably adhered to the second adhesive layer 76. The surface area of first adhesive layer 74 is less than the surface area of second adhesive layer 76.

Test Methods:

Fluid Handling Capacity is a measure of the combined ability of the composite to take up moisture and to evaporate it to the environment. This test is performed by laminating a sample cut to the size of a Paddington cup to the cup on the side having the rubber ring. The circular sealing ring is placed on the sample of the cup and the screws are secured. The cup is weighed (W1). The cup is then turned upside down and filled with 20 ml of a NaCl solution (0.9% wt in deionized water). The metal sealing place is secured to the top side of the cup. The filled cup is weighed (W2). The cup is placed sample side down into an oven at 37°C for 24 hours. After 24 hours, the cup is removed from the oven and allowed to cool to room temperature for 30 minutes. The cup is then weighed (W3). The metal sealing plate is removed and the cup is emptied. The cup is allowed to stand for 15 minutes on a tissue to remove the NaCl solution, and then weighed (W4). The test conditions are 23°C ($\pm$ 2°) and 50% ($\pm$ 2%) relative humidity. The Moisture Vapor Transmission Rate (MVTR) equals (W2-W3)x1000. The Static Absorption equal (W4-W1)x1000. The Fluid Handling Capacity (FHC) in $g/10cm^2/24$ hours is determined as follows:

$$FHC=(W2 - W3) + (W4 - W1)$$

## EXAMPLES

The invention is further described by reference to the following non-limiting examples.

### Examples 1-4 comparative

### Single Layer Pressure Sensitive Absorbing Adhesives

### Example 1: comparative

To 59 parts by weight of a solvent based acrylic adhesive, DuroTak 380-2819 from National Starch at room temperature, is added 40 parts by weight Luquasorb 1010 and 1.0 parts by weight aluminum acetyl acetonate (AAA) crosslinker. The adhesive was coated at a thickness of 120 $\mu$m onto a release liner and dried. A polyurethane film backing having a thickness of 25 $\mu$m was laminated onto the adhesive layer. Table 1 below shows the Fluid Handling Capacity (FHC), Static absorption and Moisture Vapor Transmission Rate (MVTR) of the adhesive composite.

### Examples 2-4: comparative

In a similar manner to Example 1, adhesives are prepared having the compositions shown in Table 1. All amounts are in percent by weight.

Table 1

| Example | Acrylic Adhesive | Luquasorb 1010 | AAA | Thickness ($\mu$m) | FHC ($g/m^2/24h$) | Static Absorption ($g/m^2/24h$) | MVTR ($g/m^2/24h$ |
|---|---|---|---|---|---|---|---|
| 1 | 59 | 40 | 1 | 120 | 2590 | 1200 | 1390 |
| 2 | 67 | 32 | 1 | 80 | 2135 | 740 | 1395 |
| 3 | 59 | 40 | 1 | 80 | 2130 | 835 | 1295 |
| 4 | 67 | 32 | 1 | 120 | 2100 | 865 | 1235 |

### Examples 5-6 comparative

### Multilayer Pressure Sensitive Absorbing Adhesives

### Example 5: comparative

A fluid absorbing adhesive made up of 58% by weight DuroTak 380-2819, 40% by weight Luquasorb 1010 and 2% by weight AAA was prepared and coated at a thickness of 150 $\mu$m onto a 25 $\mu$m thick polyurethane film. A second layer of the adhesive having a thickness of 150 $\mu$m was laminated to the first adhesive layer to create an adhesive layer having a total thickness of 300 $\mu$m. The composite was sterilized at 25 kGy. Table 2 below shows the FHC, Static absorption and MVTR of the double layer construction (Example 5B) as compared to a construction having a single layer of hydrocolloid adhesive (Example 5A).

Table 2

| Example comparative | FHC (g/m$^2$/24h) | Static Absorption (g/m$^2$/24h) | MVTR (g/m$^2$/24h) |
|---|---|---|---|
| 5A: 150 $\mu$m thick | 2595 | 1315 | 1280 |
| 5B: 300 $\mu$m thick | 3760 | 2900 | 860 |

**Example 6:**

6A: A multilayer construction was prepared by laminating a 0.3mm layer of a rubber based hydrocolloid adhesive onto an 80 $\mu$m thick layer of the acrylic hydrocolloid adhesive of Example 5 that had been coated onto a 25 $\mu$m thick polyurethane film. The rubber based hydrocolloid adhesive contained 20% by weight polyisobutylene, 40% by weight sodium carboxy methyl cellulose and 40% by weight rubber phased formed from a 2:8 ratio of physically cross-linked solid rubber (SIS/SI) and a compatible liquid rubber (SI).

6B: A multilayer construction was prepared substantially in accordance with Example 6A with the exception that the thickness of the acrylic hydrocolloid adhesive layer was 160 $\mu$m.

Table 3 below shows the FHC, Static absorption and MVTR of the construction of Example 6A and Example 6B as compared to a construction having only the rubber based hydrocolloid adhesive (Comparative).

Table 3

| Example | FHC (g/m$^2$/24h) | Static Absorption (g/m$^2$/24h) | MVTR (g/m$^2$/24h) |
|---|---|---|---|
| Comp. | 3400 | 3050 | 350 |
| 6A | 4445 | 3240 | 1205 |
| 6B | 5125 | 3610 | 1195 |

The results of Table 3 demonstrate that the addition of the thin super-absorbent polymer containing adhesive layer, the MVTR is significantly increased, and therefore the fluid handling capacity is much higher without a significant increase in thickness.

**Skin Adhesion:**

The adhesive composites to be tested were cut into 20 mm x 7 cm strips and applied to the inner part of the forearms of each of 6 people. To determine skin adhesion, each strip was removed after a defined wear time at a 90° angle using an Instron adhesion tester at a speed of 300mm/min. The peel force of each example was measured after 24 hours (Table 4a) of wear time and after 48 hours of wear time (Table 4b).

Example A is a 120 $\mu$m thick layer of adhesive containing 67% by weight Duro-Tak 2819 solvent based acrylic, 32% by weight Luquasorb 1010 and 1% by weight AAA coated onto a backing of 25 $\mu$m polyurethane film and sterilized by 25 kGy.

Example B is a 120 $\mu$m thick layer of adhesive containing 59% by weight Duro-Tak 2819 solvent based acrylic, 40% by weight Luquasorb 1010 and 1% by weight AAA coated onto a backing of 25 $\mu$m polyurethane film and sterilized by 25 kGy.

Comparative Example C is a commercially available, ultra-thin (140 $\mu$m) finger wrap having an MVTR of 502 g/m$^2$/24h, a static absorption of 900 g/m$^2$/24h and an FHC of 1402 g/m$^2$/24h.

Table 4a

| 24 Hour Wear | | | | | | | | | | |
|---|---|---|---|---|---|---|---|---|---|---|
| Example | 1 | 2 | 3 | 4 | 5 | 6 | Avg. | Std. Dev. | Max | Min |
| A | 1.94 | 1.77 | 0.88 | 1.78 | 2.21 | 2.74 | 1.89 | 0.48 | 2.74 | 1.78 |
| B | 2.92 | 1.84 | 0.88 | 1.15 | 1.34 | 2.76 | 1.82 | 0.88 | 2.76 | 1.15 |
| C | 0.95 | 0.57 | 0.24 | 0.68 | 1.52 | 0.77 | 0.79 | 0.46 | 1.52 | 0.68 |

Table 4b

| 48 Hour Wear | | | | | | | | | | |
|---|---|---|---|---|---|---|---|---|---|---|
| Example | 1 | 2 | 3 | 4 | 5 | 6 | Avg. | Std. Dev. | Max | Min |
| A | 1.33 | 2.37 | lost | 1.39 | 1.76 | 1.89 | 1.75 | 0.42 | 2.37 | 1.33 |
| B | 1.07 | 2.49 | - | 1.79 | 1.27 | 1.54 | 1.43 | 0.65 | 2.49 | 0.79 |
| C | 0.54 | 0.77 | lost | lost | 0.86 | lost | 0.72 | 0.17 | 0.86 | 0.54 |

**Claims**

1.  An adhesive composite comprising:

    a polymeric backing layer having a first surface and a second surface;
    a first fluid absorbing adhesive layer having a first surface and a second surface comprising (a) 20-80% by weight of a solvent-based acrylic pressure sensitive adhesive and (b) 20-80% by weight of at least one super-absorbent polymer or hydrocolloid having an average particle size of less than 150 $\mu$m, wherein the thickness of the adhesive layer is 40 $\mu$m to 300 $\mu$m and the first surface of the first adhesive layer is adhered to the second surface of the backing layer,
    a second fluid absorbing adhesive layer having a first surface and a second skin-contacting surface comprising a rubber-based pressure sensitive adhesive, wherein
    the thickness of the adhesive layer is at least 200 $\mu$m and the first surface of the second adhesive layer is adhered to the second surface of the first adhesive layer,
    wherein the overall adhesive composite has a fluid handling capacity of at least 4000 g/m$^2$/24 hours.

2.  The adhesive composite of claim 1 wherein the thickness of the first adhesive layer less than 200 $\mu$m.

3.  The adhesive composite of claim 1 wherein the first adhesive layer further comprises a crosslinker.

4.  The adhesive composite of claim 1 wherein the first adhesive layer comprises a hydrocolloid and a super absorbing polymer.

5.  The adhesive composite of claim 1 wherein the superabsorbent polymer comprises sodium polyacrylate.

6.  The adhesive composite of any preceding claim wherein the superabsorbent polymer or hydrocolloid has an average particle size of less than 400 $\mu$m, preferably less than 150 $\mu$m, more preferably less than 100 $\mu$m.

7.  The adhesive composite of claim 1 wherein the polymeric backing is breathable.

8.  The adhesive composite according to any preceding claim wherein a static absorption of the composite is greater than 600 g/m$^2$/24 hours.

9.  The adhesive composite according to any of the above claims, wherein the first fluid absorbing adhesive layer comprises (a) 20-80% by weight of a solvent-based acrylic pressure sensitive adhesive and (b) 20-80% by weight of at least one super absorbent polymer having at least 10% crosslinking or a hydrocolloid.

10. The adhesive composite of claim 9 wherein the overall adhesive composite has a moisture vapor transmission rate of at least 1100 g/m$^2$/24 hours.

11. The adhesive composite of any preceding claim further comprising a removable release layer on an outer surface of the adhesive layer.

12. The adhesive composite of any preceding claim wherein an adhesive control agent is further included in the adhesive layer.

13. The adhesive composite of claim 2 wherein the adhesive control agent is a liquid rubber.

**14.** The adhesive composite of any preceding claim further comprising a pharmaceutically active agent in the adhesive layer.

**Patentansprüche**

**1.** Haftmittelkomposit, umfassend:

eine polymere Rückenschicht mit einer ersten Oberfläche und einer zweiten Oberfläche,
eine erste Fluid-absorbierende Haftmittelschicht mit einer ersten Oberfläche und einer zweiten Oberfläche, umfassend (a) 20 - 80 Gew.-% eines Lösungsmittel-basierten Acryl-Haftklebers und (b) 20 - 80 Gew.-% von mindestens einem superabsorbierenden Polymer oder Hydrokolloid mit einer durchschnittlichen Teilchengröße von weniger als 150 $\mu$m, wobei die Dicke der Haftmittelschicht 40 $\mu$m bis 350 $\mu$m beträgt und die erste Oberfläche der ersten Haftmittelschicht an die zweite Oberfläche der Rückenschicht gebunden ist,
eine zweite Fluid-absorbierende Haftmittelschicht mit einer ersten Oberfläche und einer zweiten Haut-kontaktierenden Oberfläche, umfassend einen Haftkleber auf Kautschuk-Basis, wobei die Dicke der Haftmittelschicht mindestens 200 $\mu$m beträgt und die erste Oberfläche der zweiten Haftmittelschicht an die zweite Oberfläche der ersten Haftmittelschicht gebunden ist, wobei das Gesamt-Haftmittelkomposit eine Fluid-verarbeitende Kapazität von mindestens 4000 g/m$^2$/24 Stunden aufweist.

**2.** Haftmittelkomposit gemäß Anspruch 1, wobei die Dicke der ersten Haftmittelschicht weniger als 200 $\mu$m beträgt.

**3.** Haftmittelkomposit gemäß Anspruch 1, wobei die erste Haftmittelschicht weiter einen Vernetzer umfaßt.

**4.** Haftmittelkomposit gemäß Anspruch 1, wobei die erste Haftmittelschicht ein Hydrokolloid und ein superabsorbierendes Polymer umfaßt.

**5.** Haftmittelkomposit gemäß Anspruch 1, wobei das super absorbierende Polymer Natriumpolyacrylat umfaßt.

**6.** Haftmittelkomposit gemäß jedwedem vorhergehenden Anspruch, wobei das superabsorbierende Polymer oder Hydrokolloid eine durchschnittliche Teilchengröße von weniger als 400 $\mu$m, vorzugsweise weniger als 150 $\mu$m, mehr bevorzugt weniger als 100 $\mu$m aufweist.

**7.** Haftmittelkomposit gemäß Anspruch 1, wobei die polymere Rückenschicht atmungsaktiv ist.

**8.** Haftmittelkomposit gemäß jedwedem vorhergehenden Anspruch, wobei eine statische Absorption des Komposits größer als 600 g/m$^2$/24 Stunden beträgt.

**9.** Haftmittelkomposit gemäß einem der vorhergehenden Ansprüche, wobei die erste Fluid-absorbierende Haftmittelschicht (a) 20-80 Gew.-% eines Lösungsmittel-basierten Acryl-Haftklebers und (b) 20-80 Gew.-% von mindestens einem superabsorbierenden Polymer mit mindestens 10% Vernetzung oder einem Hydrokolloid umfaßt.

**10.** Haftmittelkomposit gemäß Anspruch 9, wobei das Gesamt-Haftmittelkomposit eine Wasserdampfdurchlässigkeitsrate von mindestens 1100 g/m$^2$/24 Stunden aufweist.

**11.** Haftmittelkomposit gemäß jedwedem vorhergehenden Anspruch, weiter umfassend eine entfernbare Trennschicht auf einer äußeren Oberfläche der Haftmittelschicht.

**12.** Haftmittelkomposit gemäß jedwedem vorhergehenden Anspruch, wobei ein Haftmittel-Kontrollmittel weiter in der Haftmittelschicht enthalten ist.

**13.** Haftmittelkomposit gemäß Anspruch 12, wobei das Haftmittel-Kontrollmittel ein flüssiger Kautschuk ist.

**14.** Haftmittelkomposit gemäß jedwedem vorhergehenden Anspruch, weiter umfassend ein pharmazeutisch wirksames Mittel in der Haftmittelschicht.

**Revendications**

1. Composite adhésif comprenant :

   une couche de support polymérique possédant une première surface et une seconde surface ;
   une première couche adhésive absorbant du fluide possédant une première surface et une seconde surface comprenant (a) 20 à 80 % en poids d'un adhésif acrylique à base de solvant sensible à la pression et (b) 20 à 80 % en poids d'au moins un polymère super absorbant ou d'un hydrocolloïde ayant une taille particulaire moyenne inférieure à 150 $\mu$m, dans lequel l'épaisseur de la couche adhésive est de 40 $\mu$m à 300 $\mu$m et la première surface de la première couche adhésive est collée à la seconde surface de la couche de support,
   une seconde couche adhésive absorbant du fluide possédant une première surface et une seconde surface en contact avec la peau comprenant un adhésif à base de caoutchouc sensible à la pression, dans lequel l'épaisseur de la couche adhésive est d'au moins 200 $\mu$m et la première surface de la seconde couche adhésive est collée à la seconde surface de la première couche adhésive,
   dans lequel le composite adhésif global possède une capacité de traitement de fluide d'au moins 4000 g/m$^2$/24 heures.

2. Composite adhésif selon la revendication 1, dans lequel l'épaisseur de la première couche adhésive est inférieure à 200 $\mu$m.

3. Composite adhésif selon la revendication 1, dans lequel la première couche adhésive comprend en outre un agent de réticulation.

4. Composite adhésif selon la revendication 1, dans lequel la première couche adhésive comprend un hydrocolloïde et un polymère super absorbant.

5. Composite adhésif selon la revendication 1, dans lequel le polymère super absorbant comprend du polyacrylate de sodium.

6. Composite adhésif selon une quelconque revendication précédente, dans lequel le polymère super absorbant ou l'hydrocolloïde possède une taille particulaire moyenne inférieure à 400 $\mu$m, de préférence inférieure à 150 $\mu$m, et de manière davantage préférée inférieure à 100 $\mu$M.

7. Composite adhésif selon la revendication 1, dans lequel le support polymérique est respirant.

8. Composite adhésif selon une quelconque revendication précédente, dans lequel l'absorption statique du composite est supérieure à 600 g/m$^2$/24 heures.

9. Composite adhésif selon l'une quelconque des revendications ci-dessus, dans lequel la première couche adhésive absorbant du fluide comprend (a) 20 à 80 % en poids d'adhésif acrylique à base de solvant sensible à la pression et (b) 20 à 80 % en poids d'au moins un polymère super absorbant ayant au moins 10 % de réticulation ou d'un hydrocolloïde.

10. Composite adhésif selon la revendication 9, dans lequel le composite adhésif global a un taux de transmission de la vapeur d'eau d'au moins 1100 g/m$^2$/24 heures.

11. Composite adhésif selon une quelconque revendication précédente, comprenant en outre une couche détachable amovible sur une surface externe de la couche adhésive.

12. Composite adhésif selon une quelconque revendication précédente, dans lequel un agent de contrôle de l'adhésion est en outre inclus dans la couche adhésive.

13. Composite adhésif selon la revendication 2, dans lequel l'agent de contrôle de l'adhésion est un caoutchouc liquide.

14. Composite adhésif selon une quelconque revendication précédente, comprenant en outre un agent pharmaceutiquement actif dans la couche adhésive.

10

12
14
18

Figure 1

20

22
24
26
28

Figure 2

30

32
34
36
37
38

Figure 3

40

42
44
46
48

Figure 4

Figure 5

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61028556 B